# EUROPÄISCHE PATENTSCHRIFT

(11) **EP 1 960 767 B1**
(45) Veröffentlichungstag und Bekanntmachung des Hinweises auf die Patenterteilung: **13.06.2012**
(21) Anmeldenummer: 06818682.4
(22) Anmeldetag: 21.11.2006
(51) Int. Cl.: G01N 29/24, G01N 29/07, G01N 27/83, G01N 27/87, G01N 27/90

(54) **Verfahren und System zur zerstörungsfreien, elektromagnetischen Ultraschallprüfung eines metallischen Werkstücks**
Method and system for nondestructive, electromagnetic ultrasound testing of a metallic workpiece
Procédé et système de test non-destructif, électromagnétique et ultrasonore d'une pièce métallique

(30) Priorität: 17.12.2005 DE 102005060582
(43) Veröffentlichungstag der Anmeldung: 27.08.2008
(73) Patentinhaber: NDT Systems & Services AG, 76297 Stutensee (DE); Fraunhofer-Gesellschaft zur Förderung der angewandten Forschung e.V., 80686 München (DE)
(72) Erfinder: YASHAN, Andre, 66125 Saarbrücken (DE); WILLEMS, Herbert, 66809 Nalbach (DE); NIESE, Frank, 66125 Saarbrücken (DE)
(74) Vertreter: Jany und Petersen
(86) Internationale Anmeldenummer: PCT/EP2006/011117
(87) Internationale Veröffentlichungsnummer: WO 2007/068327

(56) Entgegenhaltungen:
- EP-A1- 0 677 742
- EP-A2- 0 200 183
- DE-A1- 3 128 825
- GB-A- 2 120 789
- US-A- 3 550 435
- HUESCHELRATH G: "COMBINED ROTATING EMAT WALL THICKNESS MEASURING AND FLUX LEAKAGE DEFECT DETECTION SYSTEM FOR IN-LINE TUBE TESTING" 1985 INT COMMITTEE ON NONDESTRUCTIVE TESTING, COLUMBUS, OH, USA, 1985, Seiten 1830-1837, XP009078133

## Beschreibung

Die Erfindung betrifft ein Verfahren zur zerstörungsfreien Prüfung eines metallischen Werkstücks mittels eines Prüfkopfes, der einen elektro-magnetischen Ultraschallwandler mit einer Magnetfeldquelle und einem Magnetfeldsensor aufweist. Die Erfindung betrifft ferner ein Auswerteverfahren zum Auswerten von Messdaten, die mit einem derartigen Prüfkopf ermittelt wurden und ein Prüfsystem.

Insbesondere für Rohrleitungen, beispielsweise Erdgas- oder Erdölpipelines, ist eine zerstörungsfreie Prüfung von großer Bedeutung. Nach dem Stand der Technik werden hierfür Molche mit Prüfköpfen eingesetzt, die einen Ultraschallwandler aufweisen, mit dem Ultraschallwellen erzeugt und Ultraschallechos detektiert werden können. Durch Auswertung der Ultraschallechos kann eine Laufzeitinformation der Ultraschallwelle ermittelt und daraus die Wandstärke berechnet werden. Auf diese Weise können Korrosionsstellen und andere Defekte, die zu einer verminderten Wandstärke führen, erkannt werden.

Neben elektro-magnetischen Ultraschallwandlern, bei denen unmittelbar in dem zu prüfenden Werkstück Ultraschallwellen erzeugt werden, sind im Stand der Technik piezo-elektrische Ultraschallwandler bekannt, bei denen Ultraschallwellen außerhalb des Werkstücks erzeugt und mittels eines Kopplungsmittels in das Werkstück eingekoppelt werden.

Piezo-elektrische Ultraschallwandler haben dabei den Vorteil, dass bei der Einkopplung der Ultraschallwelle in das zu prüfende Werkstück ein Eintrittsecho entsteht, mit dem der Abstand des Prüfkopfes zu dem Werkstück ermittelt werden kann. Bei Einsatz eines elektro-magnetischen Ultraschellwandlers entsteht kein solches Eintrittsecho, so dass durch eine Laufzeitauswertung nur die Dicke des Werkstücks, nicht jedoch dessen Abstand von dem Prüfkopf ermittelt werden kann.

Bei flüssigkeitsgefüllten Rohrleitungen, beispielsweise Erdölpipelines, steht die vorhandene Flüssigkeit als Kopplungsmittel zur Verfügung, so dass der Einsatz piezo-elektrischer Ultraschallwandler relativ problemlos möglich ist. Bei gasgefüllten Rohrleitungen, beispielsweise Erdgaspipelines, ist eine Einkopplung von Ultraschallwellen und damit der Einsatz piezo-elektrischer Ultraschallwandler nicht oder nur mit sehr großem Aufwand möglich. In der EP 0 775 910 E1 wurde deshalb vorgeschlagen, für derartige Anwendungen elektro-magnetische Ultraschallwandler einzusetzen.

Bei Einsatz elektro-magnetischer Ultraschallwandler kann jedoch nicht zwischen Innen- oder Außenfehlern einer Rohrleitung unterschieden werden, da kein Eintrittsecho entsteht und folglich durch Auswertung der Ultraschallechos auch keine Information über den Abstand des Prüfkopfes von der Oberfläche des zu prüfenden Werkstücks gewonnen werden kann. Ein weiteres Problem bei Einsatz elektro-magnetischer Ultraschallwandler besteht darin, dass sich das Signal-Rauschverhältnis mit zunehmendem Abstand des Prüfkopfes von dem Werkstück drastisch verschlechtert, so dass eine Laufzeitauswertung in der Regel nur möglich ist, wenn der Abstand des Prüfkopfes von dem Werkstück weniger als etwa 1 mm beträgt. Haben sich durch Innenkorrosion in einer Rohrleitung Vertiefungen gebildet, kann der Abstand des Ultraschallprüfkopfes von der zu messenden Wand so groß werden, dass keine zuverlässige Aussage über die Wandstärke mehr möglich ist.

Für viele Anwendungen, insbesondere zur Überprüfung von Rohrleitungen ist es wünschenswert, zwischen Innen- und Außenfehlern unterscheiden zu können. Es besteht deshalb ein Bedarf an einem Prüfkopf, mit dem neben einer Wanddickeninformation zusätzlich eine Abstandsinformation über den Abstand des Prüfkopfes von dem Werkstück ermittelt werden kann, da in einem Bereich mit Innenfehlern der Abstand des Prüfkopfes von der Wand um die Tiefe der Fehlstelle erhöht ist.

Zur Lösung dieses Problems wird in der EP 0677742 A1 vorgeschlagen, in Messpausen des Ultraschallwandlers ergänzend eine Wirbelstrommessung durchzuführen. Bei einer Wirbelstromprüfung wird mit einer Sendespule ein elektromagnetisches Wechselfeld erzeugt, das von der elektrischen Leitfähigkeit, der magnetischen Permeabilität und der Geometrie des zu prüfenden Werkstücks beeinflusst wird. Mit einem Magnetfeldsensor, der neben der Sendespule angeordnet ist, kann dieses Wechselfeld gemessen und der Abstand von dem zu prüfenden Werkstück ermittelt werden. Ist der Abstand bedingt durch einen Innenfehler zu groß für eine Ultraschallecho-Auswertung, kann die Wanddicke als Differenz zwischen der Wanddicke eines ungeschädigten Bereichs und dem zusätzlichen Abstand des Prüfkopfes von der geschädigten Wand ermittelt werden.

Ein wesentlicher Nachteil des aus der EP 0677742 A1 bekannten Verfahrens besteht jedoch darin, dass sich durch die zwischen den Ultraschallmessungen durchgeführten Wirbelstrommessungen die zur Prüfung eines Werkstücks benötigte Zeit etwa verdoppelt. Hinzu kommt ein erheblicher apparativer Aufwand.

Aus der DE 31 53 252 C2 und der DE 31 28 825 C2 ist es ferner bekannt, zur Prüfung ferromagnetischer Materialen Ultraschallmessungen mit Streuflussmessungen zu kombinieren. Dabei wird ein Magnetfeld benutzt, das durch einen um den Prüfkörper rotierenden Magneten erzeugt wird, der den Prüfkörper mit zwei Polschuhen umgibt. Eine Messeinrichtung, die Streufluss- und Ultraschallmessungen kombiniert, ist ferner auch aus der GB 2 120 789 A bekannt. Auch bei dieser Messeinrichtung wird das zu untersuchende Werkstück zwischen den Polschuhen eines Permanentmagneten angeordnet und für die Messung des Streuflusses ein Streuflussdetektor und für die Messung des Ultraschallsignals eine entsprechend angepasste Spule verwendet.

Aus der EP 0 717 842 B1 ist eine Vorrichtung zum Detektieren von Rissen mittels einer elektromagnetischen Transientendiffusionsmethode bekannt, bei der magnetische Größen gemessen werden. Es werden separate Sonden für die Streufluss- und Wirbelstrommessung eingesetzt, jedoch keine Ultraschall-Messung.

Aus der EP 0 276 299 B1 ist das Überprüfen von Verbundwerkstoffen durch eine kombinierte Anwendung von Impuls-Wirbelstrom und piezoelektrisch erzeugtem Ultraschall bekannt, wobei separate Sonden für die Wirbelstrom- und Ultraschallmessung verwendet werden.

Die EP 0 200 183 A2 offenbart ein System zur zerstörungsfreien Prüfung eines metallischen Werkstücks, umfassend einen elektro-magnetischen Ultraschallwandler mit einer Magnetfeldquelle und einem Magnetfeldsensor, einen Speicher und eine Auswerteeinheit.

Aufgabe der Erfindung ist es deshalb, einen Weg aufzuzeigen, wie mit geringerem Aufwand eine gasgefüllte Rohrleitung überprüft und dabei Innenfehler von Außenfehlern unterschieden werden können.

Diese Aufgabe wird gelöst durch ein Verfahren zur zerstörungsfreien Prüfung eines metallischen Werkstücks mit den Merkmalen des Anspruchs 1. Weitere Ausgestaltungen sind Gegenstand der nebengeordneten Ansprüche.

Bei dem erfindungsgemäßen Verfahren kann aus einem einzigen Antwortsignal, das von einem einzigen Anregungspuls erzeugt wird, durch Auswertung verschiedener Signalbeiträge zwischen Innen- und Außenfehlern einer Rohrleitung unterschieden werden. Ein wesentlicher Vorteil des erfindungsgemäßen Verfahrens besteht dabei darin, dass durch die verbesserte Signalauswertung im Vergleich zu herkömmlichen Ultraschallmessungen mit elektromagnetischen Ultraschallwandlern keine zusätzliche Messzeit zum Ermitteln der Wanddickeninformation benötigt wird. Mit einem Prüfkopf kann deshalb eine Rohrleitung im wesentlichen in derselben Zeit überprüft werden, die nach dem Stand der Technik bereits für eine Ultraschall-Wanddickenmessung benötigt wurde, obwohl erfindungsgemäß durch eine zusätzliche Information zwischen Innen- und Außenfehlern unterschieden werden kann.

Während nach dem Stand der Technik nur der Ultraschallecho-Beitrag eines Antwortsignals ausgewertet und daraus eine Wanddickeninformation ermittelt wird, wird bei dem erfindungsgemäßen Verfahren zusätzlich ein Magnetfeldbeitrag des Antwortsignals ausgewertet und daraus eine weitere Information zur Unterscheidung zwischen Innen- und Außenfehlern ermittelt. Im Rahmen der Erfindung wurde nämlich erkannt, dass das bei einer Ultraschallecho-Messung mit einem elektromagnetischen Ultraschallwandler erhaltene Antwortsignal neben dem Ultraschallecho-Beitrag auch einen Streufeldbeitrag und einen Wechselfeldbeitrag als Magnetfeldbeiträge enthält, durch deren Auswertung sich in Kombination mit der Auswertung des Ultraschallecho-Beitrags eine Abstandsinformation und/oder eine Wanddickeninformation gewinnen lässt.

Der Streufeldbeitrag beruht auf Streufluss des von der Magnetfeldquelle erzeugten Magnetfeldes. Um ein maximales Streuflusssignal zu erhalten, wird bevorzugt ein Prüfkopf verwendet, bei dem der Magnetfeldsensor zwischen einem magnetischen Nordpol und einem magnetischen Südpol der Magnetfeldquelle an einer Stirnseite des Prüfkopfes angeordnet ist, mit welcher der Prüfkopf bei Durchführung des Verfahrens dem Werkstück zugewandt ist. Der magnetische Nordpol und der magnetische Südpol der Magnetfeldquelle bewirken auf diese Weise eine Magnetisierung des Werkstücks in Längsrichtung. Im Bereich von Wanddickenreduktionen kommt es zur Ausbildung von Streufeldern, die von dem Magnetfeldsensor des Prüfkopfs erfasst werden können. Wird bei verschwindendem Ultraschallbeitrag ein erhöhter Streufeldbeitrag festgestellt, so deutet dies auf einen Innenfehler hin. Tritt ein erhöhter Streufeldbeitrag zusammen mit einem starken Ultraschallbeitrag auf, liegt ein Außenfehler vor.

Ist der Prüfkopf relativ zu dem Werkstück in Ruhe, so ist das Streufeld zeitlich konstant. Erst durch eine Bewegung des Prüfkopfs relativ zu dem Werkstück kommt es zu einer Zeitabhängigkeit des Streufelds. Selbst wenn ein Molch mit einem Prüfkopf relativ schnell durch eine Rohrleitung bewegt wird, ist die Frequenz des gemessenen Streufelds wesentlich geringer als die Frequenz des in dem Antwortsignal enthaltenen Ultraschallsignals. Der Streuflussbeitrag des Antwortsignals kann deshalb durch eine Frequenzfilterung ermittelt und separat ausgewertet werden, um eine von der Ultraschallmessung unabhängige Wanddickeninformation zu gewinnen.

Eine Auswertung des Streufeldbeitrags ist auch bei Prüfköpfen möglich, die nur eine einzige Spule aufweisen, die sowohl als Anregungsspule zum Erzeugen des Anregungspulses als auch als Magnetfeldsensor zum Erfassen des Antwortsignals eingesetzt wird. Bevorzugt hat der für die Erfindung verwendete Prüfkopf aber zusätzlich zu dem Magnetfeldsensor auch eine Anregungsspule, mit welcher der Anregungspuls erzeugt wird und die zwischen dem Nordpol und dem Südpol der Magnetfeldquelle neben den Magnetfeldsensor angeordnet ist.

Der Magnetfeldbeitrag des Antwortsignals enthält ferner einen Wechselfeldbeitrag eines durch den Anregungspuls von der Anregungsspule erzeugten Wechselfeldes. Zum Erzeugen des Anregungspulses fließt nämlich durch die Anregungsspule ein Wechselstrom, so dass ein magnetisches Wechselfeld erzeugt wird, das einen Wechselfeldbeitrag zu dem Magnetfeldbeitrag des Antwortsignals bewirkt. Der Wechselfeldbeitrag tritt praktisch zeitgleich mit dem Anregungspuls auf, so dass der Wechselfeldbeitrag von dem Ultraschallecho-Beitrag des Antwortsignals durch geeignete Wahl des zeitlichen Auswerteintervalls getrennt werden kann. Bevorzugt werden deshalb zur Auswertung des Antwortsignals ein erstes Zeitintervall und ein zweites Zeitintervall separat ausgewertet, wobei durch Auswertung des ersten Zeitintervalls der Wechselfeldbeitrag und durch Auswertung des zweiten Zeitintervalls der Ultraschallecho-Beitrag ermittelt werden.

Zur Auswertung des Wechselfeldbeitrags kann auf die Prinzipien der Wirbelstromprüfung zurückgegriffen werden. Bei der Wirbelstromprüfung fließt ein elektrischer Strom der Stärke I und der Frequenz ω=2πf in einer Sendespule (deren Funktion hier von der Anregungsspule übernommen wird) und erzeugt dadurch ein elektromagnetisches Wechselfeld in der Umgebung, das heißt auch am Ort eines Magnetfeldsensors und in einem Prüfkörper. Dieses Wechselfeld wird von der elektrischen Leitfähigkeit σ, der magnetischen Permeabilität µ und von der Geometrie des Prüfkörpers, insbesondere von dem Abstand zwischen Prüfkörper und Sensor, beeinflusst. Durch Auswertung des Wechselfeldbeitrags können deshalb bei geeigneter Kalibrierung der Abstand des Prüfkopfes von dem Werkstück und/oder andere Werkstückparameter bestimmt werden.

Prinzipiell ist eine Auswertung des Wechselfeldbeitrags auch bei Prüfköpfen möglich, die nur eine einzige Spule aufweisen, die sowohl als Anregungsspule zum Erzeugen des Anregungspulses für die Ultraschall- und die Wirbelstrommessung als auch als Magnetfeldsensor verwendet wird. Die Impedanz der Anregungsspule hängt nämlich von dem Abstand zwischen Prüfkopf und Werkstück ab, so dass durch eine Impedanzmessung der Anregungsspule ebenfalls der Wechselfeldbeitrag ermittelt werden kann. Bevorzugt wird jedoch ein Prüfkopf verwendet, der zusätzlich zu der Anregungsspule einen Magnetfeldsensor aufweist.

Bevorzugt werden sowohl der Streufeldbeitrag als auch der Wechselfeldbeitrag des Antwortsignals ausgewertet. Eine Gesamtbetrachtung der Auswertungsergebnisse des Streufeldbeitrags, des Wechselfeldbeitrags und des Ultraschallecho-Beitrags ermöglicht es, eine besonders umfassende Information über den Zustand des zu prüfenden Werkstücks zu erhalten.

Die Vorteile der beschriebenen Erfindung werden im wesentlichen auch durch eine neuartige Auswertung der mit einem Prüfkopf gemessenen Antwortsignale erreicht. Die Erfindung betrifft deshalb auch die Verwendung eines vorstehend erläuterten erfindungsgemäßen Verfahrens zur zerstörungsfreien Prüfung eines metallischen Werkstücks zum Zwecke des Auswertens von Messdaten mit den Merkmalen des Anspruchs 6.

Da zur Auswertung der Antwortsignale umfangreiche Berechnungen erforderlich sind, empfiehlt sich der Einsatz einer elektronischen Datenverarbeitungsanlage. Die Erfindung betrifft deshalb auch ein Computerprogrammprodukt, das direkt in den Speicher eines digitalen Computers geladen werden kann und Softwareabschnitte umfasst, mit denen die Schritte eines derartigen Auswerteverfahrens ausgeführt werden, wenn das Produkt auf einem Computer läuft. Die Erfindung betrifft ferner ein computergeeignetes Speichermedium, beispielsweise eine CD, DVD oder Festplatte, auf dem ein solches Computerprogrammprodukt gespeichert ist.

Die eingangs genannte Aufgabe wird ferner gelöst durch ein System mit den Merkmalen des Anspruchs 9.

Weitere Einzelheiten und Vorteile der Erfindung werden anhand eines Ausführungsbeispiels unter Bezugnahme auf die beigefügten Zeichnungen erläutert. Die darin beschriebenen Merkmale können einzeln oder in Kombination verwendet werden, um bevorzugte Ausgestaltungen der Erfindung zu schaffen. Es zeigen:
- Fig. 1: eine schematische Darstellung eines erfindungsgemäßen Prüfsystems;
- Fig. 2: einen Prüfkopf des in Figur 1 dargestellten Systems einschließlich Feldlinienverlauf bei Prüfung eines intakten Wandabschnitts;
- Fig. 3: den Prüfkopf gemäß Figur 2 bei Prüfung eines Wandabschnitts mit einem Innenfehler; und
- Fig. 4: den Prüfkopf gemäß Figur 2 bei Prüfung eines Wandabschnitts mit einem Außenfehler.

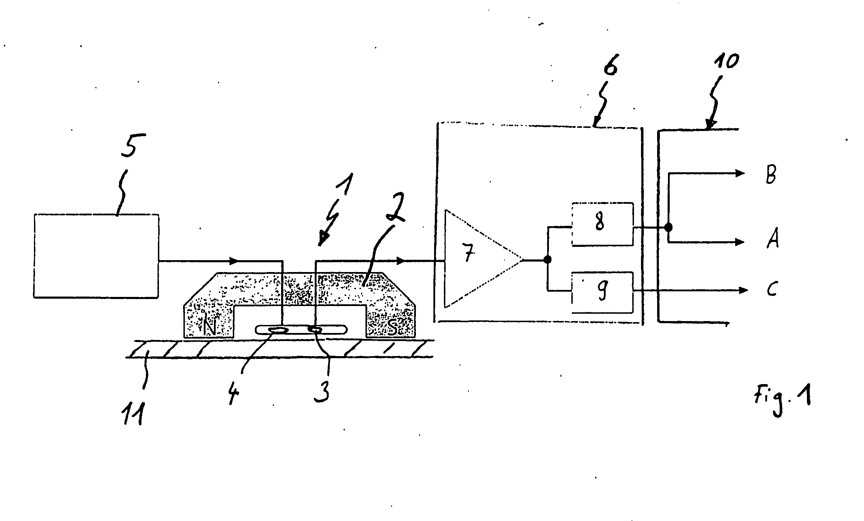

Figur 1 zeigt eine schematische Skizze eines Systems zur zerstörungsfreien Prüfung eines metallischen Werkstücks. Das System umfasst einen Prüfkopf, der einen Ultraschallwandler 1 mit einer Magnetfeldquelle 2, einem Magnetfeldsensor 3 in Form einer Spule und einer Anregungsspule 4 aufweist. Der Magnetfeldsensor 3 und die Anregungsspule 4 sind zwischen einem magnetischen Nordpol N und einem magnetischem Südpol S der Magnetfeldquelle 2 an einer Stirnseite des Prüfkopfes angeordnet, mit welcher der Prüfkopf im Betrieb einem zu prüfenden Werkstück 11 zugewandt ist.

Bei dem dargestellten Ausführungsbeispiel ist die Magnetfeldquelle 2 als Permanentmagnet mit einem U-förmigen Polschuh ausgebildet. Auf diese Weise wird ein zu prüfendes Werkstück in Längsrichtung magnetisiert, so dass sich ein im wesentlichen parallel zur Oberfläche des Werkstücks 11 verlaufender Feldlinienverlauf ergibt. Um einen derartigen Feldlinienverlauf zu erzeugen kann beispielsweise auch eine Magnetfeldquelle mit zwei stabförmigen Permanentmagneten verwendet werden, zwischen denen der Magnetfeldsensor 3 und die Anregungsspule 4 angeordnet werden, wobei einer dieser Permanentmagnete mit seinem Nordpol und der andere Magnet mit seinem Südpol an der Stirnseite des Prüfkopfes angeordnet sind.

Als Magnetfeldquelle kann auch ein Elektromagnet verwendet werden. Als Magnetfeldsensor 3 wird bevorzugt eine Spule verwendet, wobei jedoch auch andere Magnetfeldsensoren geeignet sein können.

Zum Erzeugen einer Ultraschallwelle wird mittels des elektromagnetischen Ultraschallwandlers 1 auf das Werkstück ein Anregungspuls übertragen. Die Anregungsspule 4 ist zu diesem Zweck an eine Ansteuerelektronik 5 angeschlossen, mit welcher der Anregungspuls erzeugt und auf die Anregungsspule 4 übertragen wird. Die Frequenz des Anregungspulses entspricht der Frequenz der zu erzeugenden Ultraschallwelle und liegt in der Regel bei etwa 0,5 MHz bis 10 MHz. Die Dauer des Anregungspulses beträgt einige Schwingungszyklen. Beispielsweise kann zur Prüfung einer Rohrleitung ein Anregungspuls mit einer Frequenz von 2 MHz und einer Zeitdauer von 1 µs bis 10 µs, bevorzugt 2 µs bis 6 µs, verwendet werden. Damit die mittels des Anregungspulses erzeugte Ultraschallwelle eine ausreichende Intensität hat, die es erlaubt in einem Antwortsignal Ultraschallechos mit einem vorteilhaften Signal-Rauschverhältnis zu identifizieren, wird für den Anregungspuls eine Spannung von mindestens 0,5 kV, bevorzugt 1 kV bis 5 kV, besonders bevorzugt 2 kV bis 4 kV verwendet. Die Ansteuerelektronik 5 wird bevorzugt von einer Batterie gespeist, so dass der Prüfkopf auf einem Molch zur Prüfung von Rohrleitungen eingesetzt werden kann.

Der Anregungspuls wird von der Anregungsspule auf das zu prüfende Werkstück als hochfrequentes Wechselfeld übertragen. Bei ferromagnetischen Werkstücken, wie sie üblicherweise als Stahl für Rohrleitungen verwendet werden, bewirkt dieses magnetische Wechselfeld eine magneto-striktive Anregung einer Ultraschallwelle. Das von der Magnetfeldquelle erzeugte Magnetfeld dient zur Einstellung eines günstigen magneto-striktiven Arbeitspunktes. Um diesen Arbeitspunkt wird das von der Magnetfeldquelle 2 erzeugte Magnetfeld mit dem Anregungspuls der Anregungsspule 4 moduliert.

Bei metallischen Werkstücken, die nicht ferromagnetisch sind, bewirkt das Wechselfeld der Anregungsspule 4 eine Ultraschallerzeugung durch die Lorenzkraft, die auf von dem Anregungspuls induzierte Wirbelströme wirkt. Eine Ultraschallanregung durch Lorenzkräfte erfolgt prinzipiell auch bei ferromagnetischen Werkstoffen, jedoch ist der magneto-striktive Anregungsmechanismus wesentlich effizienter, so dass in der Praxis bei ferromagnetischen Werkstoffen die Anregung über Lorenzkräfte eher unbedeutend ist. Da eine Ultraschallanregung über Lorenzkräfte weniger effizient als eine magneto-striktive Ultraschallanregung ist, sind bei nichtferromagnetischen Werkstoffen größere Spannungen für den von der Ansteuerelektronik 5 erzeugten Anregungspuls erforderlich.

Im Anschluss an das Übertragen des Anregungspulses auf das Werkstück wird mittels des Magnetfeldsensors 3 ein Antwortsignal gemessen. Der Magnetfeldsensor 3 ist an eine Auswerteelektronik 6 angeschlossen, mit der eine Vorauswertung des Antwortsignals vorgenommen wird. Die Auswerteelektronik 6 umfasst einen Vorverstärker 7, einen Hochpass 8 und eine Tiefpass 9. Das Antwortsignal wird zunächst mittels des Vorverstärkers 7 verstärkt und anschließend den parallel geschalteten Eingängen des Hochpasses 8 und des Tiefpasses 9 zugeführt. Der Hochpass 8 hat eine Grenzfrequenz zwischen 10 kHz und 500 kHz, bevorzugt zwischen 100 kHz und 200 kHz, so dass an dem Ausgang des Hochpasses 8 nur jene Teile des Antwortsignals ankommen, deren Frequenz größer als die Grenzfrequenz des Hochpasses 8 ist und die folglich den Ultraschallecho-Beitrag enthalten. Die Grenzfrequenz des Tiefpasses 9 liegt bevorzugt zwischen 5 kHz und 500 kHz, bevorzugt zwischen 5 kHz und 100 kHz, insbesondere zwischen 10 kHz und 50 kHz, so dass an dem Ausgang des Tiefpasses nur Signalbestandteile des Antwortsignals ankommen, deren Frequenz kleiner als die Grenzfrequenz des Tiefpasses 9 ist und die folglich den Streufeldbeitrag enthalten.

Die Auswerteelektronik 6 ist an eine Auswerteeinheit 10 angeschlossen, mit der eine Wanddickeninformation über die Dicke des Werkstücks und eine Abstandsinformation über den Abstand des Prüfkopfes von dem Werkstück ermittelt werden. Die Auswerteelektronik 6 kann auch an einen Speicher angeschlossen sein, auf den die Auswerteeinheit 10 zugreifen kann. Auf diese Weise ist es möglich, die Auswerteeinheit 10 auch außerhalb des Prüfkopfes anzuordnen und beispielsweise als PC zu realisieren. Mit dem Prüfkopf gewonnene Messdaten können der Auswerteeinheit 10 zur Verfügung gestellt werden und zu einem beliebigen Zeitpunkt nach der Messung ausgewertet werden.

Bei der Auswertung des Antwortsignals wird anhand eines Ultraschallecho-Beitrags eine Wanddickeninformation über die Dicke des Werkstücks übermittelt. Ergänzend wird anhand eines Magnetfeldbeitrags des Antwortsignals eine zweite unabhängige Wandstärkeninformation und eine Abstandsinformation über den Abstand des Prüfkopfes von dem Werkstück ermittelt.

Der zum Ermitteln der weiteren Informationen verwendete Magnetfeldbeitrag des Antwortsignals enthält einen Streufeldbeitrag, der auf aus dem Werkstück 11 austretendem Streufluss des von der Magnetfeldquelle 2 erzeugten Magnetfeldes beruht. Dieser Streufeldbeitrag wird mittels des Tiefpasses 9 durch eine Frequenzfilterung des Antwortsignals ermittelt. Ruht der Prüfkopf relativ zu dem Werkstück ist der Streufeldanteil des Antwortsignals zeitlich konstant. Bei bewegtem Prüfkopf ist der Streufeldanteil zeitabhängig, jedoch liegt seine Frequenz selbst bei schneller , Bewegung des Prüfkopfs bei weniger als 10 kHz.

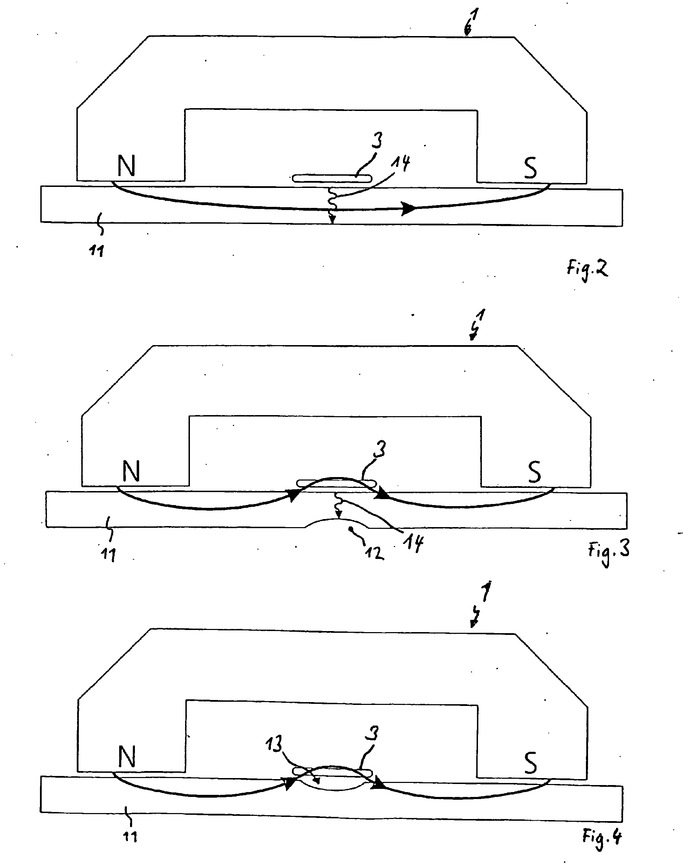

Das Prinzip einer Streufeldmessung wird im folgendem anhand der Figuren 2 bis 4 erläutert, die einen Ultraschallwandler 1 beim Erzeugen einer Ultraschallwelle 14 in einem Werkstück 11 zeigt. Bei Prüfung eines intakten Rohrwandabschnitts ergibt sich der in Figur 2 dargestellte Verlauf der Feldlinien, bei dem die Feldlinien im wesentlichen innerhalb des Werkstücks 11 verlaufen und praktisch kein Streufluss auftritt. Ist die Dicke des Werkstücks 11 durch einen Defekt 12, 13 reduziert, so werden die Feldlinien an der entsprechenden Stelle aus dem Werkstück 11 herausgedrängt, so dass ein Streufeld auftritt, das von dem Magnetfeldsensor 3 erfasst werden kann. Befindet sich der Prüfkopf 1 auf einem Molch, so ergibt sich bei einem Außendefekt 12 der zu prüfenden Rohrleitung der in Figur 3 gezeigte Feldlinienverlauf. Bei einem Innendefekt 13 ergibt sich entsprechend der in Figur 4 dargestellte Feldlinienverlauf.

Während der in Figur 3 dargestellte Außendefekt 12 durch Auswertung des Ultraschallecho-Beitrags des Antwortsignals anhand der reduzierten Wandstärke erkannt werden kann, ist dies bei dem in Figur 4 dargestellten Innendefekt 13 nicht möglich. Bedingt durch den Defekt 13 besteht nämlich zwischen der Anregungsspule 4 und der zu prüfenden Oberfläche des Werkstücks 11 ein vergrößerter Abstand, durch den die Übertragung des Anregungspulses auf das Werkstück 11 verhindert wird.

Indem sowohl der Ultraschallecho-Beitrag als auch der Streufeldbeitrag des Antwortsignals ausgewertet werden, kann eine präzisere und umfassendere Aussage über den Zustand des untersuchten Werkstücks gemacht werden. Wichtig in diesem Zusammenhang ist, dass für derartige Messungen ein vereinfachter Prüfkopf verwendet werden kann, bei dem die Anregungsspule 4 zugleich auch als Magnetfeldsensor 3 verwendet wird. Bevorzugt ist jedoch ein Prüfkopf der in Figur 1 dargestellten Art, bei dem eine Anregungsspule 4 und zusätzlich ein Magnetfeldsensor 3 in Form einer weiteren Spule vorhanden sind.

Eine Abstandsinformation über den Abstand des Prüfkopfes von dem Werkstück 11 kann durch eine Wirbelstrommessung ermittelt werden. Dazu ist es erforderlich, dass neben der Anregungsspule 4 ein Magnetfeldsensor 3 angeordnet ist. Bei dem im folgenden beschriebenen Verfahren wird der Anregungspuls sowohl für die Ultraschallecho-Messung als auch für die Wirbelstrommessung genutzt. Das mit dem Magnetfeldsensor 3 gemessene Antwortsignal enthält neben dem Ultraschallecho-Beitrag einen Magnetfeldbeitrag, der einen wirbelstrombedingten Wechselfeldbeitrag eines von dem Anregungspuls der Anregungsspule 4 erzeugten Wechselfeldes enthält.

Die Stärke des Wechselfeldbeitrags am Ort des Magnetfeldsensors 3 hängt einerseits von werkstückunabhängigen Parametern (z. B. Stromstärke des Anregungspulses, Geometrie und Windungszahl der Anregungsspule) und andererseits von werkstückabhängigen Parametern ab. Zu den werkstückabhängigen Parametern gehört neben der elektrischen Leitfähigkeit und der magnetischen Permeabilität insbesondere der Abstand zwischen dem Werkstück und dem Ultraschallwandler 1. Durch eine Auswertung des Wechselfeldbeitrags des Antwortsignals kann deshalb eine Abstandsinformation gewonnen werden.

Der wirbelstrombedingte Wechselfeldbeitrag des Antwortsignals hat ebenso wie der Ultraschallecho-Beitrag des Antwortsignals die Frequenz des Anregungspulses und liegt deshalb ebenfalls am Ausgang des Hochpasses 8 an. Im Unterschied zu dem Ultraschallecho-Beitrag tritt der Wechselfeldbeitrag aber quasi gleichzeitig mit dem Anregungspuls auf. Durch eine geeignete Wahl der zeitlichen Auswertefenster kann deshalb der Wechselfeldbeitrag des Antwortsignals leicht von dem Ultraschallecho-Beitrag getrennt werden, der erst mit einer laufzeitbedingten Zeitverzögerung, die von der Wanddicke abhängt, auftritt.

Bevorzugt werden zur Auswertung des Antwortsignals ein erstes Zeitintervall und ein zweites Zeitintervall separat ausgewertet, wobei durch Auswertung des ersten Zeitintervalls der Wechselfeldbeitrag und durch Auswertung des zweiten Zeitintervalls der Ultraschallecho-Beitrag ermittelt werden. Für das erste Zeitintervall genügt dabei in der Regel eine Zeitdauer von weniger als 3 µs, gemessen ab dem Beginn des Anregungspulses. Für das erste Zeitintervall können auch längere Zeiträume gewählt werden, wobei jedoch darauf zu achten ist, dass in dem ersten Zeitintervall keine Ultraschallecho-Beiträge enthalten sind, also die Dauer des ersten Zeitintervalls, gemessen ab dem Anregungspuls, kleiner als die Zeitdauer bis zum Auftreten des ersten Ultraschallechos ist.

Die Aufspaltung des Antwortsignals in einen Ultraschallecho-Beitrag und einen wirbelstrombedingten Wechselfeldbeitrag wird von der Auswerteeinheit 10 vorgenommen. Durch Anwendung des beschriebenen Auswerteverfahrens wird das Antwortsignal in einen Ultraschallecho-Beitrag A und einen Magnetfeldbeitrag, der einen Wechselfeldbeitrag B und eine Streufeldbeitrag C enthält, unterteilt. Durch Auswertung der einzelnen Beiträge wird sowohl eine Wanddickeninformation über die Dicke des Werkstücks als auch eine Abstandsinformation über den Abstand des Prüfkopfes zu dem Werkstück ermittelt.

## Patentansprüche

1. Verfahren zur zerstörungsfreien Prüfung eines metallischen Werkstücks (11) mittels eines Prüfkopfes,
der einen elektro-magnetischen Ultraschallwandler (1) mit einer Magnetfeldquelle (2) und einem Magnetfeldsensor (3) aufweist,
wobei das Verfahren die folgenden Schritte umfasst:
Zum Erzeugen einer Ultraschallwelle wird mittels des Ultraschallwandlers (1) auf das Werkstück (11) ein Anregungspuls übertragen, mittels des Magnetfeldsensors (3) wird ein Antwortsignal gemessen, anhand eines Ultraschallecho-Beitrags des von dem Magnetfeldsensor (3) gemessenen Antwortsignals wird eine Prüfinformation, vorzugsweise eine Laufzeitinformation der Ultraschallwelle, und daraus eine Wanddickeninformation über die Dicke des Werkstücks (11), ermittelt, und
anhand eines Magnetfeldbeitrags des von dem Magnetfeldsensor (3) gemessenen Antwortsignals wird durch eine ergänzende Auswertung eine Wanddickeninformation und eine Abstandsinformation über den Abstand des Prüfkopfes von dem Werkstück (11), ermittelt, und wobei
der verwendete Prüfkopf eine Anregungsspule (4) aufweist, mit welcher der Anregungspuls erzeugt wird, wobei der zum Ermitteln der Abstandsinformation verwendete Magnetfeldbeitrag einen Wechselfeldbeitrag eines von der Anregungsspule erzeugten Wechselfeldes enthält und zum Ermitteln der Abstandsinformation der Wechselfeldbeitrag ausgewertet wird.

2. Verfahren nach Anspruch 1, **dadurch gekennzeichnet, dass** zur Auswertung des von dem Magnetfeldsensor (3) gemessenen Antwortsignals ein erstes Zeitintervall und ein zweites Zeitintervall separat ausgewertet werden, wobei
durch Auswertung des ersten Zeitintervalls der Wechselfeldbeitrag und durch Auswertung des zweiten Zeitintervalls der Ultraschallecho-Beitrag ermittelt werden.

3. Verfahren nach einem der vorhergehenden Ansprüche, **dadurch gekennzeichnet, dass** der Magnetfeldsensor (3) zwischen einem magnetischen Nordpol (N) und einem magnetischen Südpol (S) der Magnetfeldquelle (2) an einer Stirnseite des Prüfkopfes angeordnet ist, mit welcher der Prüfkopf bei Durchführung des Verfahrens dem Werkstück (11) zugewandt ist.

4. Verfahren nach Anspruch 3, **dadurch gekennzeichnet, dass** der zum Ermitteln der Wanddickeninformation und der Abstandsinformation verwendete Magnetfeldbeitrag des Auswertesignals einen Streufeldbeitrag enthält, der auf aus dem Werkstück (11) austretendem Streufluss des von der Magnetfeldquelle (2) erzeugten Magnetfeldes beruht, wobei der Streufeldbeitrag zum Ermitteln einer Wanddickeninformation ausgewertet wird.

5. Verfahren nach Anspruch 4, **dadurch gekennzeichnet, dass** der auf Streufluss beruhende Magnetfeldbeitrag des Antwortsignals durch Frequenzfilterung des Antwortsignals ermittelt wird.

6. Computerprogrammprodukt, das direkt In den Speicher eines digitalen Computers geladen werden kann und Softwareabschnitte umfasst, mit denen die Schritte des Verfahrens nach einem der Ansprüche 1 bis 5 ausgeführt werden, wenn das Produkt auf einem Computer läuft.

7. Computergeeignetes Speichermedium mit einem Computerprogrammprodukt nach Anspruch 6.

8. System zur zerstörungsfreien Prüfung eines metallischen Werkstücks mit einem Verfahren nach einem der Ansprüche 1 bis 5, umfassend einen Prüfkopf, der einen elektro-magnetischen Ultraschallwandler (1) mit einer Magnetfeldquelle (2) und einem Magnetfeldsensor (3) aufweist,
einen Speicher zum Speichern eines Antwortsignals, das mittels des Magnetfeldsensors (3) im Anschluss an die Erzeugung eines mittels des Ultraschallwandlers auf das Werkstück ausgeübten Anregungspulses gemessen wurde, und
eine Auswerteeinheit (10),
**dadurch gekennzeichnet, dass**
die Auswerteeinheit zum Auswerten des Antwortsignals durch Anwendung eines Verfahrens, bei dem zur zerstörungsfreien Prüfung eines metallischen Werkstücks (11) mittels eines Prüfkopfes zum Auswerten von Messdaten, die mit einem Prüfkopf zur zerstörungsfreien Prüfung eines metallischen Werkstücks ermittelt wurden, eingerichtet ist, wobei
der verwendete Prüfkopf einen elektro-magnetischen Ultraschallwandler (1) mit einer Magnetfeldquelle (2) und einem Magnetfeldsensor (3) aufweist, und
wobei das verwendete Verfahren die folgenden Schritte umfasst:
Zum Erzeugen einer Ultraschallwelle wird mittels des Ultraschallwandlers (1) auf das Werkstück (11) ein Anregungspuls übertragen, mittels des Magnetfeldsensors (3) wird ein Antwortsignal gemessen, anhand eines Ultraschallecho-Beitrags des von dem Magnetfeldsensor (3) gemessenen Antwortsignals wird eine Prüfinformation, vorzugsweise eine Laufzeitinformation der Ultraschallwelle und daraus eine Wanddickeninformation über die Dicke des Werkstücks (11), ermittelt, und
anhand eines Magnetfeldbeitrags des von dem Magnetfeldsensor (3) gemessenen Antwortsignals wird durch eine ergänzende Auswertung eine Wanddickeninformation und eine Abstandsinformation über den Abstand des Prüfkopfes von dem Werkstück (11), ermittelt,
wobei der verwendete Prüfkopf eine Anregungsspule (4) aufweist, mit welcher der Anregungspuls erzeugt wird, wobei der zum Ermitteln der Abstandsinformation verwendete Magnetfeldbeitrag einen Wechseifeldbeitrag eines von der Anregungsspule erzeugten Wechselfeldes enthält und zum Ermitteln der Abstandsinformation der Wechselfeldbeitrag ausgewertet wird.

## Claims

1. A method for nondestructive testing of a metallic workpiece (11) using a testing head,
which has an electromagnetic ultrasonic transducer (1) having a magnetic field source (2) and a magnetic field sensor (3),
wherein the method comprises the following steps:
an excitation pulse is transmitted using the ultrasonic transducer (1) to the workpiece (11) to generate an ultrasonic wave,
a response signal is measured using the magnetic field sensor (3), testing information, preferably transit time information of the ultrasonic wave, is ascertained on the basis of an ultrasonic echo component of the response signal measured by the magnetic field sensor (3), and wall thickness information about the thickness of the workpiece (11) is ascertained therefrom, and
wall thickness information and distance information about the distance of the testing head from the workpiece (11) is ascertained by a supplementary analysis on the basis of a magnetic field component of the response signal measured by the magnetic field sensor (3), and wherein
the testing head used has an excitation coil (4), using which the excitation pulse is generated, wherein the magnetic field component used to ascertain the distance information contains an alternating field component of an alternating field generated by the excitation coil and the alternating field component is analyzed to ascertain the distance information.

2. The method according to claim 1, **characterized in that** a first time interval and a second time interval are analyzed separately to analyze the response signal measured by the magnetic field sensor (3),
the alternating field component being ascertained by analyzing the first time interval and the ultrasonic echo component being ascertained by analyzing the second time interval.

3. The method according to any one of the preceding claims, **characterized in that** the magnetic field sensor (3) is positioned between a magnetic north pole (N) and a magnetic south pole (S) of the magnetic field source (2) on a front face of the testing head, wherein the front face of the testing head faces toward the workpiece (11) during performance of the method.

4. The method according to claim 3, **characterized in that** the magnetic field component of the response signal used to ascertain the wall thickness information contains a stray field component which originates from the leakage flux exiting from the workpiece (11) of the magnetic field generated by the magnetic field source (2), the stray field component being analyzed to ascertain wall thickness information.

5. The method according to claim 4, **characterized in that** the magnetic field component of the response signal originating from the leakage flux is ascertained by frequency filtering of the response signal.

6. A computer program product which may be loaded directly into the memory of a digital computer and comprises software sections, using which the steps of the method according to any one of claims 1 to 5 may be executed when the product runs on a computer.

7. A computer-capable storage medium having a computer program product according to claim 6.

8. A system for nondestructive testing of a metallic workpiece using a method according to any one of claims 1 to 5, comprising a testing head, which has an electromagnetic ultrasonic transducer (1) having a magnetic field source (2) and a magnetic field sensor (3),
a memory for storing a response signal, which is measured using the magnetic field sensor (3) following the generation of an excitation pulse exerted on the workpiece using the ultrasonic transducer, and
an analysis unit (10),
**characterized in that**
the analysis unit is set up to analyze the response signal by use of a method, in which for nondestructive testing of a metallic workpiece (11) using a testing head for analyzing measurement data have been ascertained using a testing head for nondestructive testing of a metallic workpiece, wherein
the testing head used has a electromagnetic ultrasonic transducer (1) having a magnetic field source (2) and a magnetic field sensor (3),
wherein the method used comprises the following steps:
an excitation pulse is transmitted using the ultrasonic transducer (1) to the workpiece (11) to generate an ultrasonic wave, and
a response signal is measured using the magnetic field sensor (3),
testing information, preferably transit time information of the ultrasonic wave, is ascertained on the basis of an ultrasonic echo component of the response signal measured by the magnetic field sensor (3), and wall thickness information about the thickness of the workpiece (11) is ascertained therefrom, and
wall thickness information and distance information about the distance of the testing head from the workpiece (11) is ascertained by a supplementary analysis on the basis of a magnetic field component of the response signal measured by the magnetic field sensor (3), wherein
the testing head used has an excitation coil (4), using which the excitation pulse is generated, wherein the magnetic field component used to ascertain the distance information contains an alternating field component of an alternating field generated by the excitation coil and the alternating field component is analyzed to ascertain the distance information.

## Revendications

1. Procédé de test non destructeur d'une pièce métallique (11), au moyen d'une tête de contrôle
équipée d'un convertisseur électromagnétique d'ultrasons (1) comportant une source (2) de champs magnétiques et un capteur (3) de champs magnétiques,
ledit procédé comprenant les étapes suivantes :
une impulsion excitatrice est transmise à la pièce (11) au moyen du convertisseur d'ultrasons (1), en vue d'engendrer une onde ultrasonore,
un signal de réponse est mesuré au moyen du capteur (3) de champs magnétiques,
une information de contrôle, de préférence une information de durée de propagation de ladite onde ultrasonore et, sur la base de cette dernière, une information d'épaisseur de paroi relative à l'épaisseur de ladite pièce (11), sont déterminées à l'appui d'une part contributive d'écho ultrasonore dudit signal de réponse mesuré par le capteur (3) de champs magnétiques,
une information d'épaisseur de paroi, et une information de distance relative à la distance comprise entre ladite tête de contrôle et ladite pièce (11), sont déterminées par une interprétation complémentaire, à l'appui d'une part contributive de champ magnétique dudit signal de réponse mesuré par ledit capteur (3) de champs magnétiques, et sachant que
la tête de contrôle employée présente un enroulement excitateur (4) à l'aide duquel l'impulsion excitatrice est engendrée, la part contributive de champ magnétique, utilisée pour la détermination de l'information de distance, renfermant une part contributive de champ alternatif d'un champ alternatif engendré par ledit enroulement excitateur, et ladite part contributive de champ alternatif étant interprétée en vue de la détermination de ladite information de distance.

2. Procédé selon la revendication 1, **caractérisé par le fait qu'**un premier intervalle de temps et un second intervalle de temps sont interprétés séparément en vue de l'interprétation du signal de réponse mesuré par le capteur (3) de champs magnétiques, sachant que
la part contributive de champ alternatif est déterminée par interprétation dudit premier intervalle de temps, et la part contributive d'écho ultrasonore est déterminée par interprétation dudit second intervalle de temps.

3. Procédé selon l'une des revendications précédentes, **caractérisé par le fait que** le capteur (3) de champs magnétiques est disposé, entre un pôle nord magnétique (N) et un pôle sud magnétique (S) de la source (2) de champs magnétiques, sur une face extrême de la tête de contrôle par laquelle ladite tête de contrôle est tournée vers la pièce (11) au cours de la mise en oeuvre dudit procédé.

4. Procédé selon la revendication 3, **caractérisé par le fait que** la part contributive de champ magnétique du signal d'interprétation, utilisée pour la détermination de l'information d'épaisseur de mur et de l'information de distance, renferme une part contributive de champ de dispersion fondée sur un flux dispersif émanant de la pièce (11) et attribué au champ magnétique engendré par la source (2) de champs magnétiques, ladite part contributive de champ de dispersion étant interprétée en vue de la détermination d'une information d'épaisseur de paroi.

5. Procédé selon la revendication 4, **caractérisé par le fait que** la part contributive de champ magnétique du signal de réponse, fondée sur un flux dispersif, est déterminée par filtrage de fréquence dudit signal de réponse.

6. Produit de programme informatique pouvant être directement chargé dans la mémoire d'un ordinateur numérique et renfermant des sections le logiciel par lesquelles les étapes du procédé, conforme à l'une des revendications 1 à 5, sont exécutées lorsque ledit produit est en fonction sur un ordinateur.

7. Moyen de mémorisation à compatibilité informatique, muni d'un produit de programme informatique conforme à la revendication 6.

8. Système de test non destructeur d'une pièce métallique à l'aide d'un procédé conforme à l'une des revendications 1 à 5, comprenant
une tête de contrôle équipée d'un convertisseur électromagnétique d'ultrasons (1) comportant une source (2) de champs magnétiques et un capteur (3) de champs magnétiques,
une mémoire conçue pour mémoriser un signal de réponse qui a été mesuré, au moyen dudit capteur (3) de champs magnétiques, dans l'enchaînement direct de la génération d'une impulsion excitatrice appliquée à ladite pièce au moyen dudit convertisseur d'ultrasons, et
une unité d'interprétation (10),
**caractérisé par le fait que**
l'unité d'interprétation est agencée pour interpréter le signal de réponse par application d'un procédé de test non destructeur d'une pièce métallique (11), au moyen d'une tête de contrôle, en vue de l'interprétation de données de mesure qui ont été déterminées au moyen d'une tête de contrôle dévolue au test non destructeur d'une pièce métallique, sachant que
la tête de contrôle employée est équipée d'un convertisseur électromagnétique d'ultrasons (1) comportant une source (2) de champs magnétiques et un capteur (3) de champs magnétiques, et
le procédé appliqué comprenant les étapes suivantes :
une impulsion excitatrice est transmise à la pièce (11) au moyen du convertisseur d'ultrasons (1), en vue d'engendrer une onde ultrasonore,
un signal de réponse est mesuré au moyen du capteur (3) de champs magnétiques,
une information de contrôle, de préférence une information de durée de propagation de ladite onde ultrasonore et, sur la base de cette dernière, une information d'épaisseur de paroi relative à l'épaisseur de ladite pièce (11), sont déterminées à l'appui d'une part contributive d'écho ultrasonore dudit signal de réponse mesuré par le capteur (3) de champs magnétiques, et
une information d'épaisseur de paroi, et une information de distance relative à la distance comprise entre ladite tête de contrôle et ladite pièce (11), sont déterminées par une interprétation complémentaire, à l'appui d'une part contributive de champ magnétique dudit signal de réponse mesuré par ledit capteur (3) de champs magnétiques,
la tête de contrôle employée présentant un enroulement excitateur (4) à l'aide duquel l'impulsion excitatrice est engendrée, la part contributive de champ magnétique, utilisée pour la détermination de l'information de distance, renfermant une part contributive de champ alternatif d'un champ alternatif engendré par ledit enroulement excitateur, et ladite part contributive de champ alternatif étant interprétée en vue de la détermination de ladite information de distance.
